# EUROPÄISCHE PATENTANMELDUNG

(11) **EP 1 674 382 A1**
(43) Veröffentlichungstag der Anmeldung: **28.06.2006**
(21) Anmeldenummer: 05022983.0
(22) Anmeldetag: 21.10.2005
(51) Int. Cl.: B62D 55/26

(54) **Kettensteg für Laufketten**

(30) Priorität: 22.12.2004 AT 21442004
(71) Anmelder: Prinoth A.G., 39049 Sterzing (IT)
(72) Erfinder: Runggaldier, Martin, 39047 St. Christina (IT); Pahl, Volker, 39030 Vintl (IT)
(74) Vertreter: Hofinger, Engelbert

(57) **Zusammenfassung**

Kettensteg für eine Laufkette (2) von Raupenfahrzeugen (1), Insbesondere Pistenfahrzeuge oder Lolpenspurgeräte, mit einem Träger (6) mit einem Aufnahmebereich (8) für eine eingesetzte Leiste (7), wobei der Aufnahmebereich (8) zwei im Wesentlichen parallele Schenkel (15, 15') umfasst, die durch einen Verbindungssteg (16) miteinander verbunden sind, der mit Abstand (d) zur Auflagefläche des Kettensteges auf die Laufkette angeordnet ist und wobei die Leiste (7) zumindest abschnittsweise in den Aufnahmebereich (8) geklebt und/oder geschweißt ist.

## Beschreibung

Die Erfindung betrifft einen Kettensteg für eine Laufkette von Raupenfahrzeugen, insbesondere Pistenfahrzeuge oder Loipenspurgeräte, mit einem Träger mit einem Aufnahmebereich für eine eingesetzte Leiste, wobei der Aufnahmebereich zwei im Wesentlichen parallele Schenkel umfasst, die durch einen Verbindungssteg miteinander verbunden sind, der mit Abstand d zur Auflagefläche des Kettensteges auf die Laufkette angeordnet ist. Weiters betrifft die Erfindung ein Raupenfahrzeug, insbesondere Pistenfahrzeug oder Loipenspurgerät, mit einer Laufkette mit einem zuvor genannten Kettensteg und wenigstens einem Antriebsrad für die Laufkette.

Gattungsgemäße Kettenstege werden in Raupenfahrzeugen eingesetzt, da sich herkömmliche einteilige Kettenstege, die z.B. aus Aluminium bestehen, im Betrieb rasch abnützen. Einteilige Kettenstege, die beispielsweise aus Stahl bestehen, sind jedoch für den Normalbetrieb zu schwer. Nach bekanntem Stand der Technik werden daher mehrteilige Kettenstege benützt, bei denen eine Leiste, beispielsweise eine so genannte Verschteißschiene in der Form einer Zahnleiste, die in der Regel aus Stahl besteht, in einem Träger aus einem leichteren Material, insbesondere einem Leichtmetall, wie Aluminium, oder aus Kunststoff, in den Aufnahmebereich des Trägers eingesetzt. Derartige Leisten werden in den Aufnahmebereich des Trägers in der Regel durch mechanische Verbindungselemente, wie z.B. durch Nieten, Schrauben oder durch Bolzen miteinander verbunden, um die Leiste vor Herausfallen bzw. einem seitlichen Verschieben zu halten.

Nachteilig an solchen Kettenstegen ist, dass die Kettenstege durch die Schwächung des Materials im Bereich der mechanischen Verbindungselemente häufig brechen.

Aufgabe der Erfindung ist daher die Entwicklung eines Kettensteges mit verringerten Brucheigenschaften.

Erfindungsgemäß wird dies dadurch erreicht, dass die Leiste zumindest abschnittsweise in den Aufnahmebereich geklebt und/oder geschweißt ist. Im Rahmen der Erfindung soll die Leiste mit dem Träger derart verbunden sein, dass keine mechanischen Verbindungselemente wie Schrauben oder Bolzen erforderlich sind, die üblicherweise die Kettenstege schwächen und damit bruchanfälliger machen. Ein weiterer Aspekt der Erfindung sieht einen Kettensteg für eine Laufkette von Raupenfahrzeugen, insbesondere Pistenfahrzeuge oder Loipenspurgeräte vor, mit einem Träger mit einem Aufnahmebereich für eine eingesetzte Leiste, wobei der Aufnahmebereich zumindest zwei Schenkel umfasst, die mit Winkel α zueinander angeordnet sind, wobei die Leiste zumindest abschnittsweise mit dem Aufnahmebereich verklebt und/oder verschweißt ist. Optional ist vorgesehen, dass ein Schenkel mit Abstand die zu Auflagefläche des Kettensteges auf die Laufkette angeordnet ist. In einem solchen Fall hat es sich als günstig erwiesen, wenn die Leiste zumindest bereichsweise an beiden Schenkeln aufliegt.

Bei einem Kettensteg für eine Laufkette von Raupenfahrzeugen, insbesondere Pistenfahrzeuge oder Loipenspurgeräte, mit einem Träger mit einem Aufnahmebereich für eine eingesetzte Leiste, wobei der Aufnahmebereich zwei im Wesentlichen parallele Schenkel umfasst, die durch einen Verbindungssteg miteinander verbunden sind, der mit Abstand zur Auflagefläche des Kettensteges auf die Laufkette angeordnet ist, hat es sich als günstig herausgestellt, wenn die zwei Schenkel und der Verbindungssteg im Querschnitt im Wesentlichen eine etwa U-förmige Nut bilden. Dadurch wird die Wahrscheinlichkeit eines Bruches des Kettensteges verringert, da herkömmliche Kettenstege insbesondere an der Stelle bevorzugt brechen, wo das Material durch Anbohren oder Durchbohren geschwächt ist. Günstig hat es sich außerdem erwiesen, wenn die Leiste bis zum Nutboden reicht, da dadurch die im Betrieb auftretenden mechanischen Kräfte besser auf die Leiste verteilt werden und die Wahrscheinlichkeit des Brechens der Leiste noch weiter verringert wird.

Besonders günstig hat sich in allen Ausführungsvarianten eine Ausbildung des Kettensteges dergestalt erwiesen, dass die Leiste mit dem Aufnahmebereich des Trägers ohne mechanische Verbindungselemente, wie Schrauben, Nieten oder Bolzen verbunden ist.

Eine bevorzugte Ausführungsvariante des erfindungsgemäßen Kettensteges sieht vor, dass die Einsetztiefe der Leiste in den Aufnahmebereich des Träger kleiner etwa ein Drittel der Höhe des Trägers, vorzugsweise kleiner etwa ein Fünftel der Höhe des Trägers ist.

Darüber hinaus hat es sich außerdem als günstig herausgestellt, die Leiste zumindest abschnittsweise formschlüssig in den Aufnahmebereich des Trägers einzubringen. Insbesondere ist ein zumindest abschnittsweise reibschlüssiges Einbringen der Leiste in den Aufnahmebereich des Trägers günstig. Ein reibschlüssiges Einbringen kann beispielsweise durch Zusammenpressen des Trägers mit einer formschlüssig eingebrachten Leiste erfolgen oder auch durch Einsetzen einer Leiste in den Aufnahmebereich des Trägers ohne Spiel. Insbesondere im Bereich, wo das Antriebsrad des Raupenfahrzeuges in die Leiste eingreift, kann dies günstig sein.

Das Ankleben der Leiste in den Aufnahmebereich des Trägers kann auf unterschiedliche Art erfolgen. Beispielsweise kann nach bekanntem Stand der Technik ein physikalisch abbindender Klebstoff verwendet werden oder auch ein chemisch abbindender Klebstoff. Als physikalisch abbindender Klebstoff kann erfindungsgemäß ein lösemittelhaltiger Nassklebstoff, ein Dispersionsklebstoff, ein Schmelzklebstoff, ein Kontaktklebstoff, ein Haftklebstoff oder ein Plastisol verwendet werden. Günstige chemisch abbindende Klebstoffe sind Cyanacrylat-Klebstoffe, Methylmethacrylat-Klebstoffe, anaerobhärtende Klebstoffe, strahlenhärtende Klebstoffe, Phenol-Formaldehydharz-Klebstoffe, Silikone, Polyimid-Klebstoffe, Epoxidharz-Klebstoffe und Polyurethan-Klebstoffe. Ein bevorzugtes Ausführungsbeispiel sieht die Verwendung eines anaerobhärtenden Klebstoffes vor auf Basis von Urethan und Methalcrylat. Anaeobhärtende Klebstoffe sind insofern günstig und daher erfindungsgemäß bevorzugt, da sie in Fugen eingebracht werden können und ohne die Zufuhr von Sauerstoff gut härten. Daher ist es günstig, einen anaerobhärtenden Klebstoff in den Aufnahmebereich des Trägers einzubringen und dann die Leiste einzusetzen. Das Härten erfolgt auch in der Abwesenheit von Sauerstoff vollständig. Überhaupt weisen derartige Klebstoffe besonders günstige Klebeeigenschaften auf, da sie auch in einem sehr breiten Temperaturbereich ideale Hafteigenschaften aufweisen. Überhaupt werden solche Klebstoffe häufig zur Verbindung von Metall auf Metall verwendet. Erfindungsgemäß sind aber auch andere Klebstoffe denkbar. Insbesondere wenn sie ähnlich gute thermische Eigenschaften sowie ähnlich gute Klebeeigenschaften von Metall auf Metall aufweisen.

Die Erfindung betrifft außerdem Verfahren zur Herstellung eines Kettensteges für eine Laufkette von Raupenfahrzeugen, insbesondere Pistenfahrzeuge oder Loipenspurgeräte, mit einem Träger mit einem Aufnahmebereich für eine eingesetzte Leiste, insbesondere Kettenstege der vorgenannten Art, wobei die Leiste und der Träger aus unterschiedlichen Materialien, insbesondere Metallen oder Legierungen, bestehen.

Nach bisher bekanntem Stand der Technik ist lediglich eine Schweißverbindung von gleichartigen Metallen bzw. Legierungen bekannt. Erst durch die Entwicklung des so genannten CMT (Cold Metal Transfer)-Schweißverfahrens ist es überhaupt denkbar, so unterschiedliche Materialien, wie beispielsweise Aluminium mit Stahl zu verschweißen. Bei diesem Verfahren, das erstmals in der WO 01/34336 beschrieben worden ist, handelt sich um ein diskontinuierliches Schweißverfahren, bei dem durch Abwechseln eines Aufheiz- und Abkühlschrittes ein "mildes" Schweißen erzielt wird.

Der Erfindung liegt die überraschende Erkenntnis zugrunde, dass die Leiste, vorzugsweise aus Stahl, mit einer Stärke von zumindest 3 mm mit einem Träger, vorzugsweise aus Aluminium, mittels des CMT-Verfahrens sowie mittels Reibschweißen verschweißbar ist. Schweißverbindungen von Aluminium mit Stahl, wie in der zuvor genannten PCT-Anmeldung beschrieben, wurden bislang nur im Automobilbereich eingesetzt. Die erfindungsgemäßen Leisten, vorzugsweise aus Stahl, werden an einen Träger, vorzugsweise aus Aluminium, geschweißt. Derartige Verbindungen erweisen sich als extrem stabil, auch bei langem Einsatz von Raupen- oder Pistenfahrzeugen.

Auch das Reibschweißverfahren, das weiter untern im Text detaillierter beschrieben wird, eignet sich überraschenderwelse zur Verbindung von Aluminium mit Stahl im vorliegenden Fall.

Weitere Vorteile und Details der Erfindung werden anhand der Figuren gezeigt. Dabei zeigt
- Fig. 1: schematisch ein erfindungsgemäßes Raupenfahrzeug,
- Fig. 2: schematisch einen Ausschnitt in Draufsicht einer erfindungsgemäßen Laufkette,
- Fig. 3: schematisch eine Explosionsdarstellung eines Kettensteges mit Leiste und Träger,
- Fig. 4: schematisch einen Ausschnitt eines Ausführungsbeispleles einer Laufkette, wo das Antriebsrad in der Mitte des Kettensteges eingreift,
- Fig. 5a-5c: drei Ausführungsbeispiele schematisch im Querschnitt für erfindungsgemäße Kettenstege mit Klebverbindungen,
- Fig. 6a-6d: vier Ausführungsbeispiele schematisch im Querschnitt für erfindungsgemäße Kettenstege mit Schweißverbindungen und
- Fig. 7: einen Kettensteg mit eingesetzter Leiste vor dem Schweißvorgang,
- Fig. 8a, 8b: zwei verschiedenen Reibschweißverfahran zur Verbindung des Kettensteges mit der Leiste.

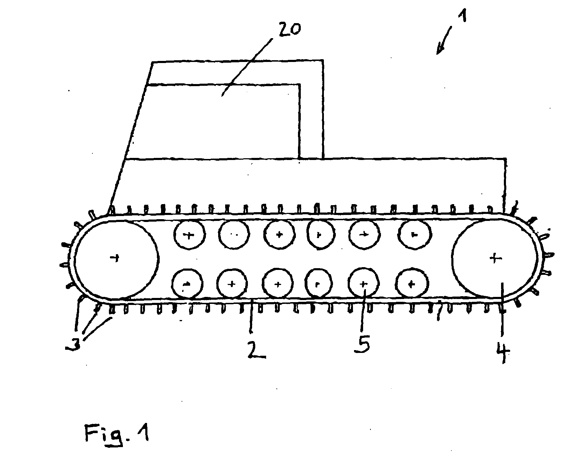

In der Fig. 1 ist ein erfindungsgemäßes Raupenfahrzeug 1 gezeigt, das eine Laufkette 2, Antriebsräder 4 und Umlenkrollen 5 aufweist. Die Steuerung des Raupenfahrzeuges 1 erfolgt durch einen Fahrer aus der Fahrerkabine 20. Eine solche Laufkette 2 weist zahlreiche erfindungsgemäße Kettenstege 3 auf, die im Betrieb in den Schnee eingreifen.

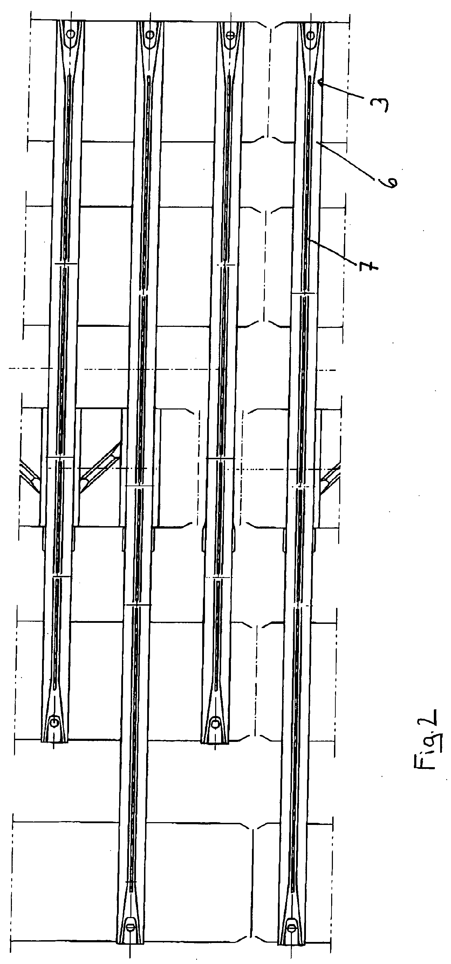

In Fig. 2 ist ein Ausführungsbeispiel für eine erfindungsgemäße Laufkette 2 gezeigt mit unterschiedlich angeordneten und unterschiedlich langen Kettenstegen 3. Das Antriebsrad 4 greift hier z.B. nicht genau in der Mitte ein, sondern könnte z.B. links und/oder rechts der Mitte eingreifen. Im gezeigten Ausführungsbeispiel erfolgt der Eingriff insbesondere rechts der Mitte.

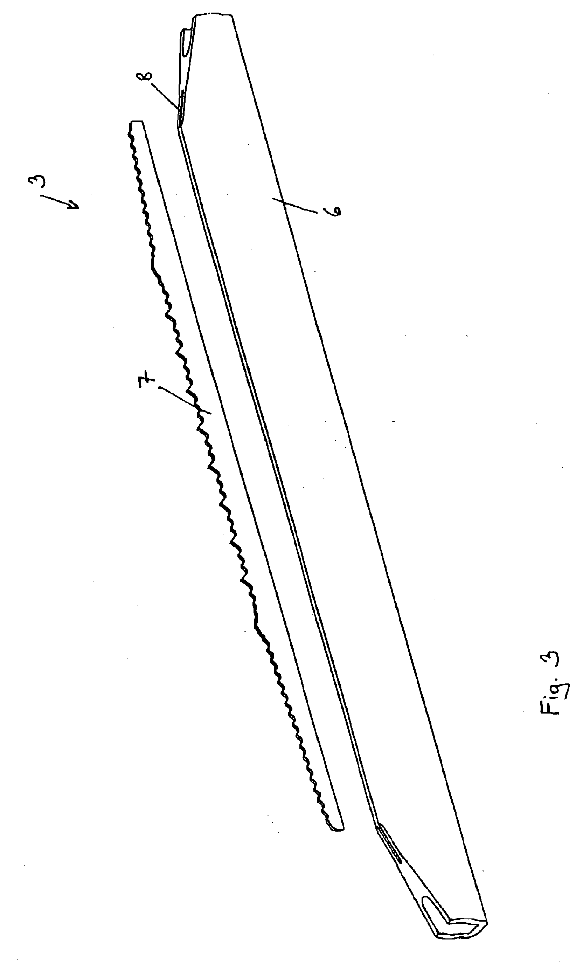

Die in Fig. 3 gezeigte Leiste 7 ist als Zahnleiste mit Zacken für einen besseren Halt im Schnee oder Eis ausgebildet. In dieser Ausführungsvariante wird die Leiste 7 in den Aufnahmebereich 8 des Trägers 6 eingeschoben und zumindest abschnittsweise verklebt.

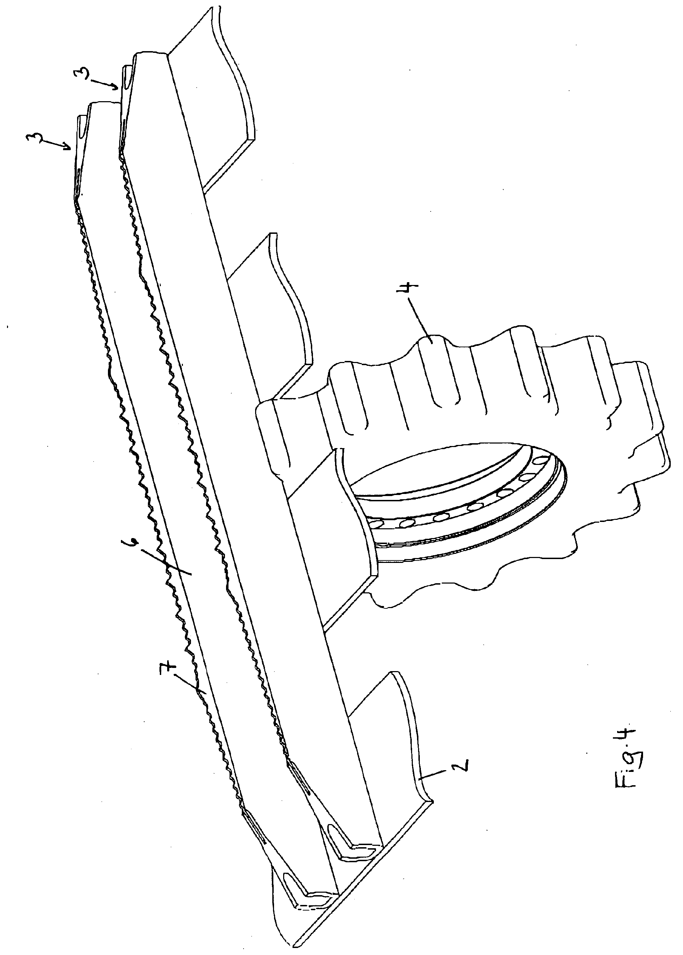

Fig. 4 zeigt ein Ausführungsbeispiel für eine Laufkette 2, wo das Antriebsrad 4 in der Mitte des Kettensteges 3 eingreift. Dies ist auch der Bereich, wo die größte mechanische Belastung auf der Leiste 7 aufgrund der Belastung durch das Antriebsrad 4 auftritt. Aufgrund des erfindungsgemäßen Verklebens und/oder Verschweißens der Leiste 7 ist ein solcher Kettensteg 3 begünstigt vor Bruch im Gegensatz zu anderen Kettenstegen 3, wo mechanische Verbindungselemente angebracht sind.

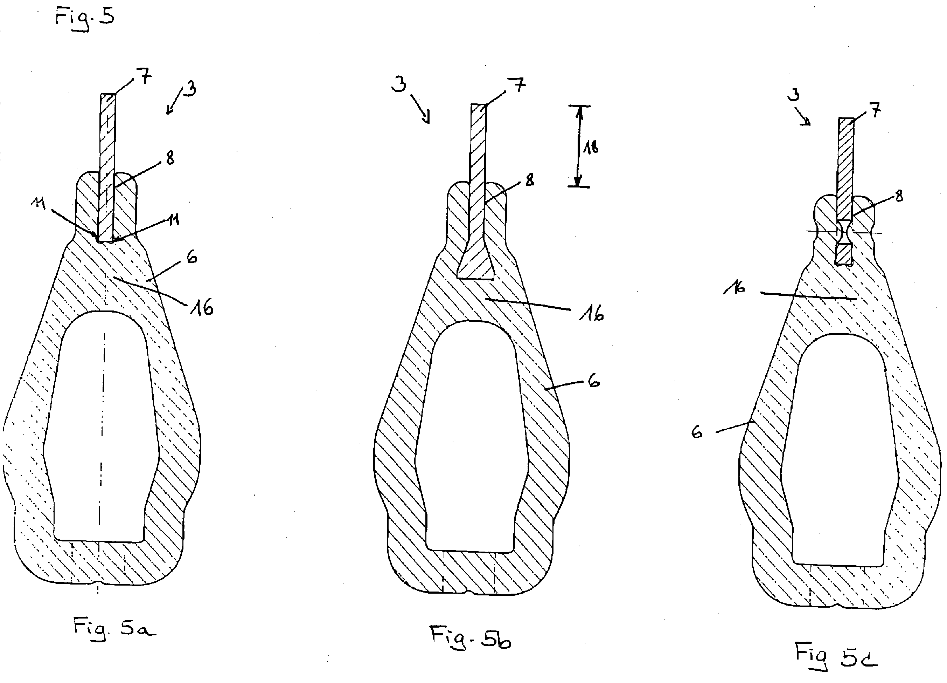

Fig. 5a-c zeigt drei Ausführungsbeispiele für das Einbringen der Leiste 7 in den Aufnahmebereich 8 des Trägers 6. Fig. 5a zeigt eine etwa U-förmige Nut, wo die Leiste 7 von oben eingeschoben ist. In der Ausnehmung 11 ist z.B. Raum zum Einbringen eines Klebers. Ein solcher Bereich 11 ist aber nicht zwingend erforderlich, da der Klebstoff nur als dünner Film eingebracht werden muss. Fig. 5b und 5c zeigen zwei Ausführungsbeispiele für formschlüssige erfindungsgemäße Zahnleisten 7. Ein weiteres Verbinden der Leiste 7 mit dem Aufnahmebereich 8 des Trägers 6 durch Toxen oder Pressen ist darüber hinaus möglich und erfindungsgemäß vorgesehen. Auch kann es günstig sein, wenn die Leiste 7 im frei liegenden Bereich 18 nach oben hin verjüngt vorgesehen ausgebildet ist, um ein leichteres Eindringen der Leiste 7 in Eis/Schnee zu ermöglichen. Überhaupt ist bei den bevorzugten Ausführungsbeispielen vorgesehen, dass die Leiste 7 wie auch in den übrigen Figuren gezeigt, aus dem Träger hervorragt, sodass die Leiste 7 bei der Verwendung im Raupenfahrzeug 1 in den Schnee oder Boden eindringen kann. Gemessen an der Gesamthöhe der Leiste 7 beträgt der aus dem Träger hervorragende Bereich 18 vorzugsweise zwischen 15% und 75%, besonders bevorzugt zwischen 25% und 50%.

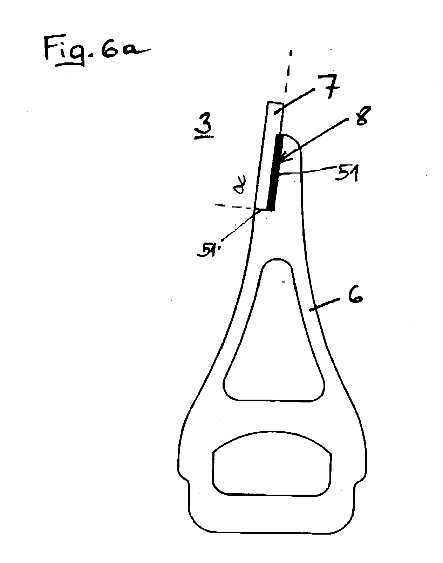

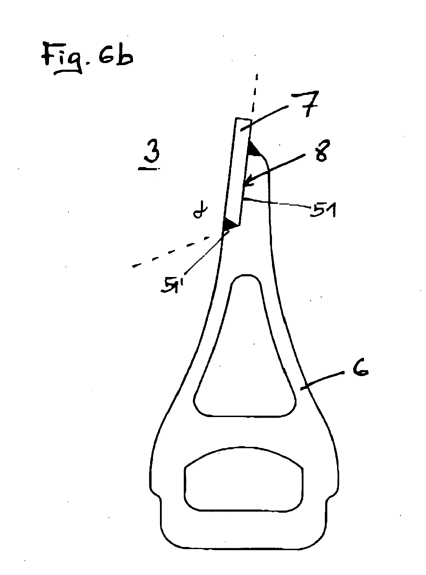

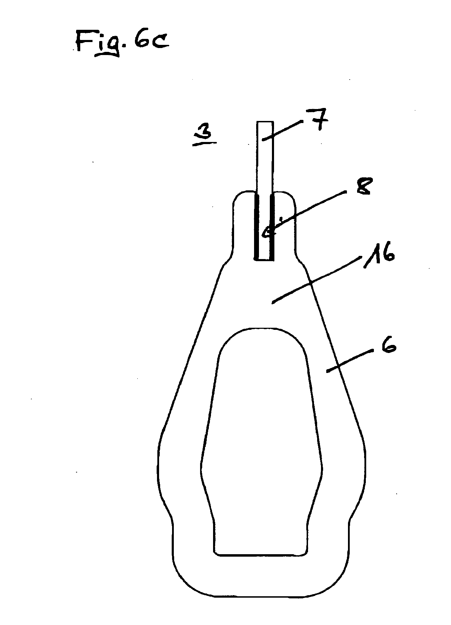

In Fig. 6a ist ein erfindungsgemäßer Kettensteg mit angeschweißter Leiste 7 gezeigt. Die Leiste 7 liegt an zwei Schenkeln 51, 51' im Aufnahmebereich 8 auf und ist an einem Schenkel 51 mittels einer Reibachweißverbindung fest angebracht. Fig. 6b zeigt ebenfalls ein Ausführungsbeispiel für einen Kettensteg 3, in dem die Leiste 7 an zwei Schenkeln 51, 51' im Aufnahmebereich 8 aufliegt, wobei in diesem Fall die Leiste 7 durch CMT-Schweißkontakte fixiert ist. Die Schweißnähte sind in beiden Fällen (Fig. 6a und 6b) fett eingezeichnet. Selbstverständlich ist in beiden Varianten auch vorgesehen, dass die Leiste 7 zusätzlich Klebverbindungen aufweist. Der Winkel α beträgt in Fig. 6a 90° und ist in Fig. 6b größer 90°, etwa 120°. Günstigerweise beträgt der Winkel α etwa 90° bis 150°. (Der Winkel α ist von den strichliert eingezeichneten Linien repräsentiert.) Fig. 6c und 6d zeigen jeweils zwei weitere Ausführungsbeispiele von Kettenstegen 3 mit U-förmiger Nut als Aufnahmebereich 8, die in die Leiste 7 eingesetzt sind. In Fig. 6c ist die Verbindung zwischen Träger 6 und Leiste 7 mittels einer Reibschweißverbindung erzielt, während in Fig. 6d die Verbindung durch ein CMT-Schweißverfahren erzielt worden ist. Um die Stabilität noch weiter zu erhöhen, ließe sich Reibschweißen mit CMT-Schweißen auch noch kombinieren.

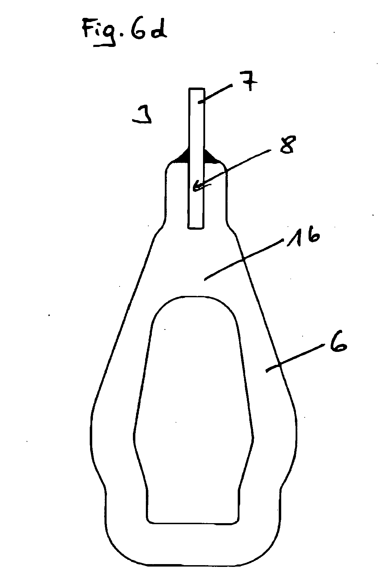

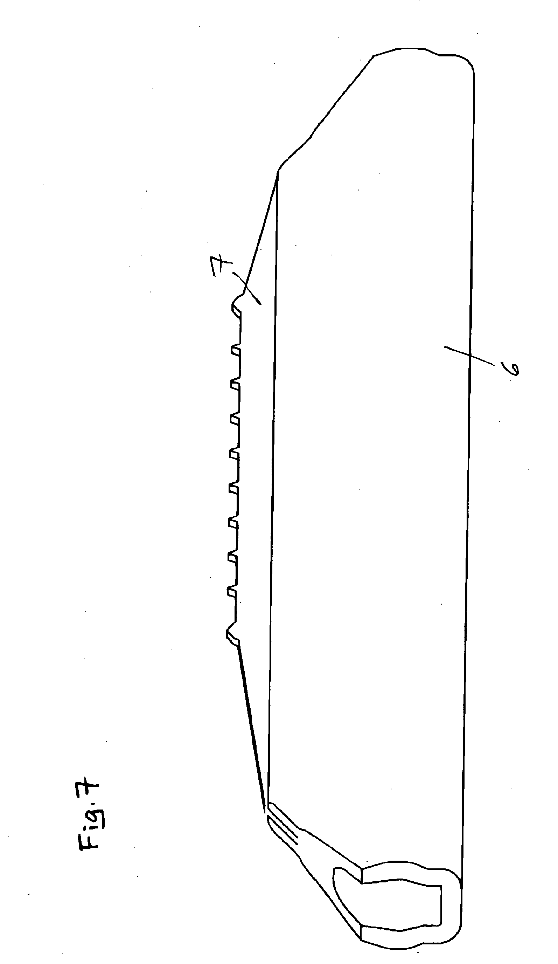

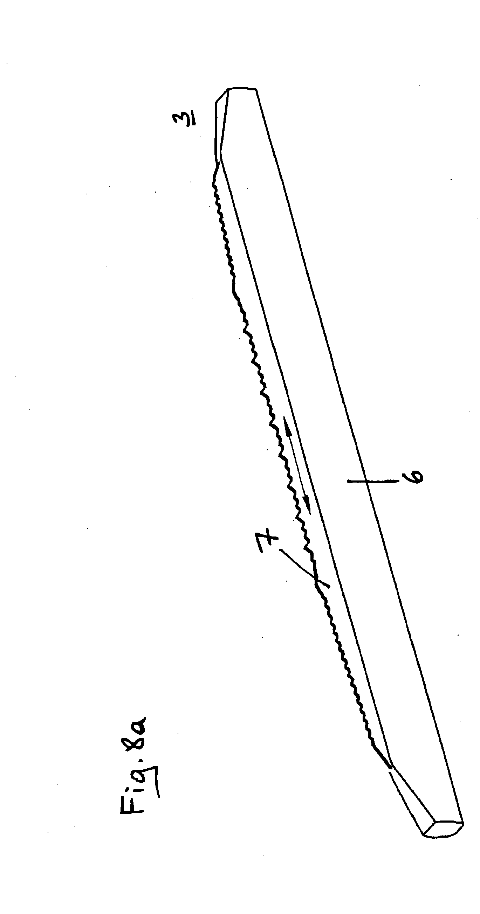

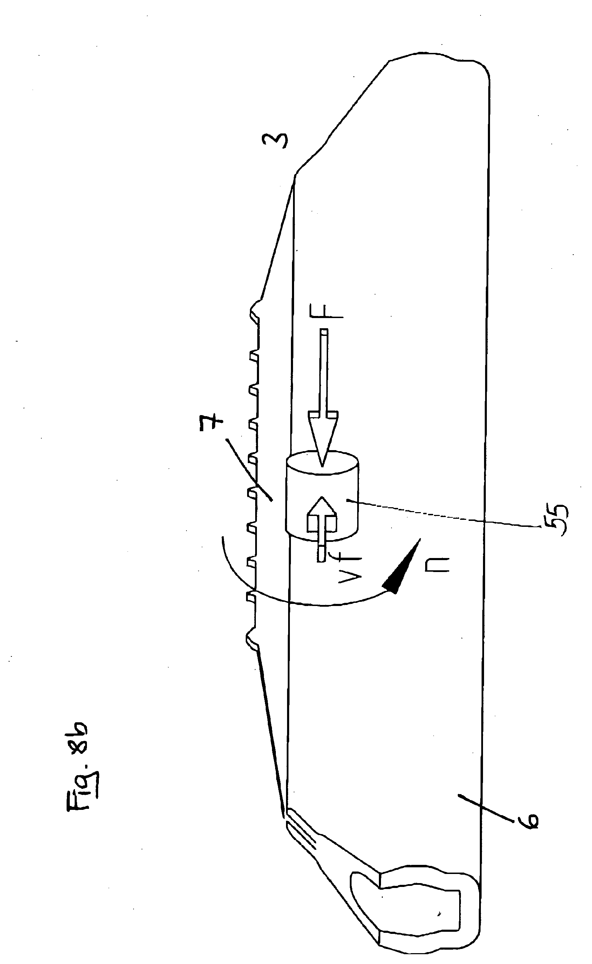

In Fig. 7 ist eine Leiste in der Form einer Zahnleiste 7 gezeigt, die in den Träger 6 eingebracht ist vor einem Reibschweißschritt. Dabei ist erforderlich, dass die Leiste 7 nicht zu lose im Träger 6 ist, sodass durch das Hin- und Herbewegen der Leiste 7 im Träger 6, angedeutet durch den Doppelpfeil, in Fig. 8a bei einer bestimmten Frequenz die beiden Komponenten eine Verbindung eingehen. Das Hin- und Herbewegen der Leiste 7 im Träger 6 muss in einer Frequenz erfolgen, sodass eine ausreichend hohe Reibungstemperatur erreicht wird. Bei ausreichender Temperatur verschweißen die Leiste 7 und der Träger 8. Im bevorzugten Ausführungsbeispiel ist die Leiste 7 aus Stahl und der Träger 6 aus Aluminium gefertigt.

Fig. 8b zeigt eine weitere Ausführungsform des Reibschweißens. Dabei wird über einen von außen einwirkenden Stempel 55, der mit einer hohen Drehzahl n rotiert (je nach Ausführungsvariante mit ca. 20.000 Umdrehungen pro Minute), und mit einer bestimmten Kraft F an den Kettensteg 7 gedrückt. Optional kann dabei die Temperatur von Leiste und/oder Träger durch eine Heizeinrichtung vorgegeben werden. Dabei geht das Leichtmetall in eine Art "teigigen Zustand" über und verbindet sich mit dem Stahl. Der Stempel 55 wird mit einer Vorschubgeschwindigkeit vf über den Kettensteg, vorzugsweise entlang des Aufnahmebereiches 8 geschoben.

Bei der Verwendung von CMT-Schweißverfahren resultieren Vorteile aufgrund reduzierter Wärmeeinbringung, wie z.B. geringerer Verzug und höhere Schweißgenauigkeit. Von bekannten Kurzlichtbogen-Schweißverfahren unterscheidet sich das CMT-Verfahren in drei wesentlichen Punkten: Die Drahtbewegung ist in die Prozessregelung eingebunden, die Wärmeeinbringung ist reduziert und der Werkstoffübergang erfolgt spritzerfrei. Jeweils bei Vor- und Zurückziehen findet mit einer Frequenz von bis zu 70 Hz statt. Dieser Vorgang unterstützt außerdem die Tropfenablöse.

## Patentansprüche

1. Kettensteg für eine Laufkette von Raupenfahrzeugen, insbesondere Pistenfahrzeuge oder Luipenspurgeräte, mit einem Träger mit einem Aufnahmebereich für eine eingesetzte Leiste, wobei der Aufnahmebereich zwei im Wesentlichen parallele Schenkel umfasst, die durch einen Verbindungssteg miteinander verbunden sind, der mit Abstand (d) zur Auflagefläche des Kettensteges auf die Laufkette angeordnet ist, **dadurch gekennzeichnet, dass** die Leiste (7) zumindest abschnittsweise in den Aufnahmebereich (8) geklebt und/oder geschweißt ist.

2. Kettensteg für eine Laufkette von Raupenfahrzeugen, insbesondere Pistenfahrzeuge oder Lolpenspurgeräte, mit einem Träger mit einem Aufnahmebereich für eine eingesetzte Leiste, wobei der Aufnahmebereich zumindest zwei Schenkel umfasst, die mit Winkel α zueinander angeordnet sind, **dadurch gekennzeichnet, dass** die Leiste (7) zumindest abschnittsweise mit dem Aufnahmebereich (8) verklebt und/oder verschweißt ist.

3. Kettensteg nach Anspruch 2, **dadurch gekennzeichnet, dass** die Leiste (7) zumindest bereichsweise an beiden Schenkeln aufliegt.

4. Kettensteg nach Anspruch 1, **dadurch gekennzeichnet, dass** die zwei Schenkel (15. 15') und der Verbindungssteg (16) im Querschnitt im Wesentlichen eine etwa U-förmige Nut bilden.

5. Kettensteg nach Anspruch 4, **dadurch gekennzeichnet, dass** die Leiste (7) im Wesentlichen bis zum Nutboden (17) reicht.

6. Kettensteg nach einem der Ansprüche 1 bis 3, **dadurch gekennzeichnet, dass** die Leiste (7) ohne mechanische Verbindungselemente mit dem Aufnahmebereich (8) verbunden ist.

7. Kettensteg nach einem der Ansprüche 1 bis 4, **dadurch gekennzeichnet, dass** die Einsetztiefe der Leiste (7) in den Aufnahmebereich (8) des Trägers (6) kleiner etwa ein Drittel der Höhe (h) des Trägers (6), vorzugsweise kleiner etwa ein Fünftel der Höhe (h) des Trägers (6) ist.

8. Kettensteg nach einem der Ansprüche 1 bis 5, **dadurch gekennzeichnet, dass** die Leiste (7) zumindest abschnittsweise formschlüssig in den Aufnahmebereich (8) des Trägers (6) eingebracht ist.

9. Kettensteg nach einem der Ansprüche 1 bis 6, **dadurch gekennzeichnet, dass** die Leiste (7) zumindest abschnittsweise reibschlüssig in den Aufnahmebereich (8) des Trägers (6) eingebracht Ist.

10. Kettensteg nach einem der Ansprüche 1 bis 7, **dadurch gekennzeichnet, dass** als Klebstoff ein chemisch härtender Klebstoff verwendet wird.

11. Kettensteg nach Anspruch 8, **dadurch gekennzeichnet, dass** als Klebstoff ein anaerobhärtender Klebstoff verwendet wird.

12. Kettensteg nach einem der Ansprüche 1 bis 9, **dadurch gekennzeichnet, dass** die Leiste (7) und der Träger (6) zumindest Abschnittsweise durch zusätzliche Verbindungsstellen, insbesondere durch Toxen oder Pressen, miteinander verbunden sind.

13. Raupenfahrzeug, insbesondere Pistenfahrzeug oder Luipenspurgerät, mit einer Laufkette mit Kettensteg und wenigstens einem Antriebsrad für die Laufkette, **dadurch gekennzeichnet, dass** der Kettensteg (3) nach einem der Ansprüche 1 bis 10 ausgebildet ist.

14. Verfahren zur Herstellung eines Kettensteges für eine Laufkette von Raupenfahrzeugen, insbesondere Pistenfahrzeuge oder Loipenspurgeräte, mit einem Träger mit einem Aufnahmebereich für eine eingesetzte Leiste, insbesondere nach einem der Ansprüche 1 bis 13, wobei die Leiste (7) und der Träger (6) aus unterschiedlichen Materialien, insbesondere Metallen oder Leglerungen, bestehen, **dadurch gekennzeichnet, dass** die Leiste (7) mit dem Träger (6) verschweißt wird.

15. Verfahren nach Anspruch 14, **dadurch gekennzeichnet, dass** der Träger (6) im Wesentlichen aus Aluminium und die Leiste (7) im Wesentlichen aus Stahl ausgebildet sind.

16. Verfahren nach Anspruch 14 oder 15, **dadurch gekennzeichnet, dass** die Leiste (7) mit dem Träger (6) durch Reibschweißen und/oder CMT-Schweißen verbunden wird.
